# EUROPÄISCHE PATENTSCHRIFT

(11) **EP 0 848 843 B1**
(45) Veröffentlichungstag und Bekanntmachung des Hinweises auf die Patenterteilung: **03.11.1999**
(21) Anmeldenummer: 96929323.2
(22) Anmeldetag: 23.08.1996
(51) Int. Cl.: G05B 19/05

(54) **VERFAHREN ZUM ERZEUGEN UND ABSPEICHERN EINES AUS BEFEHLEN BESTEHENDEN ANWENDERPROGRAMMS FÜR EINE SPEICHERPROGRAMMIERBARE STEUERUNG UND BETRIEBSVERFAHREN FÜR EINE SPEICHERPROGRAMMIERBARE STEUERUNG**
METHOD OF GENERATING AND STORING A USER PROGRAMME CONSISTING OF INSTRUCTIONS FOR A STORED-PROGRAMME CONTROL UNIT, AND METHOD OF OPERATING THE STORED-PROGRAMME CONTROL UNIT
PROCEDE DE CREATION ET DE MEMORISATION D'UN PROGRAMME UTILISATEUR CONSTITUE D'INSTRUCTIONS, DESTINE A UNE COMMANDE PROGRAMMABLE ET MODE D'UTILISATION D'UNE COMMANDE PROGRAMMABLE

(30) Priorität: 05.09.1995 EP 95113939
(43) Veröffentlichungstag der Anmeldung: 24.06.1998
(73) Patentinhaber: SIEMENS AKTIENGESELLSCHAFT, 80333 München (DE)
(72) Erfinder: KAMMLER, Heiko, D-92284 Popenricht (DE); SCHIESSL, Michael, D-92224 Amberg (DE)
(86) Internationale Anmeldenummer: EP9603744
(87) Internationale Veröffentlichungsnummer: WO9709661

(56) Entgegenhaltungen:
- EP-A- 0 089 194
- EP-A- 0 200 974
- US-A- 5 034 899
- US-A- 5 377 315

## Beschreibung

Die vorliegende Erfindung betrifft ein Verfahren zum Erzeugen und Abspeichern eines aus Befehlen bestehenden Anwenderprogramms für eine speicherprogrammierbare Steuerung, wobei die speicherprogrammierbare Steuerung bei Abarbeitung des Anwenderprogramms aus Eingangssignalen von einem technischen Prozeß Ausgangssignale für den technischen Prozeß ermittelt, sowie ein hierzu korrespondierendes Betriebsverfahren für eine speicherprogrammierbare Steuerung.

Derartige Verfahren sind allgemein bekannt, wie z.B. aus der US 5 377 315 A. Diese zeigt ein Verfahren zur Gewinnung von Flußdiagrammen von technischen Prozessen durch Dekompilierung von stehenden Anwenderprogrammen.

Die Aufgabe der vorliegenden Erfindung besteht darin, neue Verfahren zur Verfügung zu stellen.

Die Aufgabe wird für das Erzeugungs- und Abspeicherverfahren dadurch gelöst, daß die Befehle des Anwenderprogramms jeweils aus einem Funktionscode und dem Funktionscode zugeordneten Funktionsparametern bestehenden, daß die Funktionsparmater entweder auf ein Eingangssignal oder auf einen anderen Befehl verweisen und daß das Verfahren folgende Schritte aufweist:
a) bei der Erzeugung des Anwenderprogramms werden pro Ausgangssignal, beginnend mit dem dem jeweiligen Ausgangsignal zuzuordnenden Befehl, die abzuarbeitenden Befehle abgefragt, wobei folgende Prozedur abgearbeitet wird:
b) es wird der abzuarbeitende Funktionscode abgefragt und zwischengespeichert;
c) es wird die Zahl der Funktionsparameter festgestellt;
d) es werden nacheinander die Funktionsparameter abgefragt;
e) wenn der Funktionsparameter ein Eingangssignal ist, wird ein Verweis auf das Eingangssignal zwischengespeichert;
f) wenn der Funktionsparameter ein neuer Funktionscode ist, wird ein Verweis auf einen neuen Befehl zwischengespeichert, wird zu diesem neuen Befehl verzweigt und werden der andere Funktionscode zwischengespeichert und die Schritte c) bis f) für den neuen Befehl wiederholt;
g) die zwischengespeicherten Funktionscodes und die zwischengespeicherten Funktionsparameter werden erst dann in einem Remanentspeicher hinterlegt bzw. als gültig gekennzeichnet, wenn alle Befehle zumindest des jeweiligen Ausgangssignals vollständig abgefragt sind.

Auch gemäß dem Betriebsverfahren bestehen die Befehle des Anwenderprogramms jeweils aus einem Funktionscode und dem Funktionscode zugeordneten Funktionsparametern, wobei die Funktionsparameter entweder auf ein Eingangssignal oder auf einen anderen Befehl verweisen. Die erfindungsgemäßen Schritte sind wie folgt:
a) bei der zyklischen Abarbeitung wird, beginnend mit den den Ausgangsignalen zugeordneten Befehlen, pro Befehl folgende Prozedur abgearbeitet:
b) es werden der dem Befehl zugeordnete Funktionscode und die diesem Befehl zugeordneten Funktionsparameter gelesen;
c) pro Funktionsparameter wird überprüft, ob dieser auf einen anderen Befehl verweist;
d) wenn der Funktionsparameter auf ein Eingangssignal verweist, wird das Eingangssignal zwischengespeichert;
e) wenn der Funktionsparameter auf einen anderen Befehl verweist, wird zu dem anderen Befehl verzweigt und werden die Schritte b) bis e) mit dem anderen Befehl wiederholt;
f) wenn alle Funktionsparameter abgearbeitet sind, wird das dem Befehl zugeordnete Ausgangssignal ermittelt.

Weitere Vorteile und Einzelheiten ergeben sich aus der nachfolgenden Beschreibung eines Ausführungsbeispiels. Dabei zeigen:
- FIG 1: den Aufbau eines Programmiergeräts und einer speicherprogrammierbaren Steuerung,
- FIG 2: die Benutzerschnittstelle des Programmiergeräts und
- FIG 3: ein Programmierbeispiel.

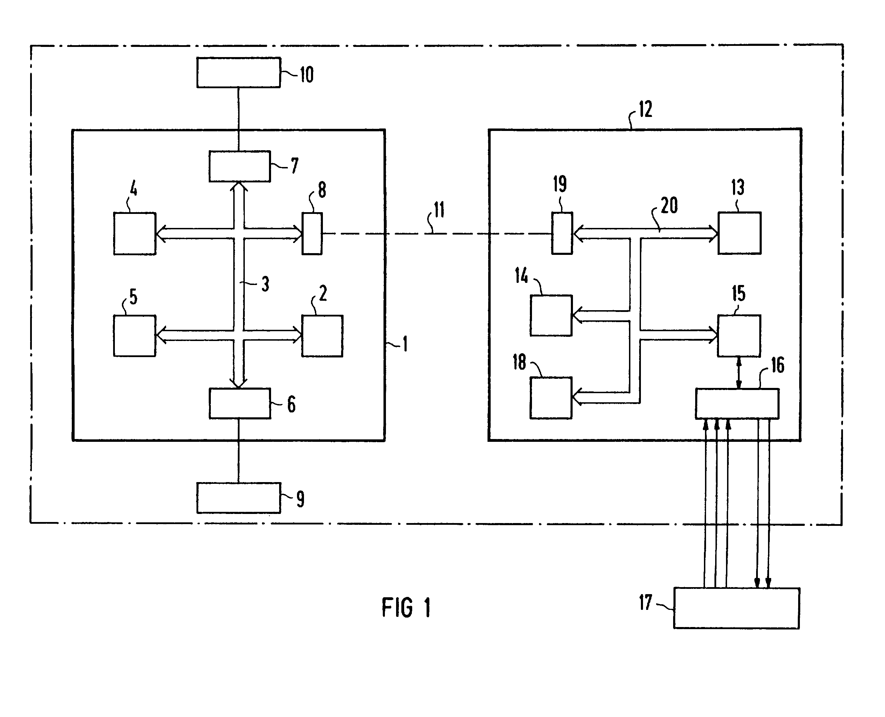

Gemäß FIG 1 weist das Programmiergerät 1 einen Prozessor 2 auf, der über das Bussystem 3 mit dem Festwertspeicher 4 und dem Schreib-Lese-Speicher 5 sowie den Schnittstellen 6,7 und 8 verbunden ist. Im Festwertspeicher 4 ist das Betriebssystem des Prozessors 2 abgespeichert, der Schreib-Lese-Speicher 5 dient dem Programmiergerät 1 als Arbeitsspeicher. Über die Schnittstelle 6 sind mittels der Eingabeeinheit 9, z.B. einer Tastatur, Daten in das Programmiergerät 1 eingebbar. Ebenso sind mittels der Schnittstelle 7 Daten auf der Anzeigeeinheit 10 darstellbar. Mittels der Kommunikationsschnittstelle 8 kann das Programmiergerät über die gestrichelt eingezeichnete Kommunikationsverbindung 11 mit einer speicherprogrammierbaren Steuerung 12 kommunizieren.

Die speicherprogrammierbare Steuerung 12 weist ebenfalls einen Prozessor 13 auf, der ein Anwenderprogramm abarbeitet. Das Anwenderprogramm besteht aus einer Vielzahl von auszuführenden Befehlen und ist im elektrisch lösch- und schreibbaren Festwertspeicher 14 hinterlegt. Gemäß dem abzuarbeitenden Anwenderprogramm greift der Prozessor 13 über den Controller 15 und die Prozeßschnittstelle 16 auf einen nicht näher dargestellten technischen Prozeß bzw. eine technische Anlage 17 zu. Er liest von dort Eingangssignale ein, speichert sie im Schreib-Lese-Speicher 18 ab und ermittelt sodann anhand des Anwenderprogramms Ausgangssignale. Die Ausgangssignale werden ebenfalls im Schreib-Lese-Speicher 18 hinterlegt und dann über den Controller 15 und die Prozeßschnittstelle 16 an den technischen Prozeß 17 ausgegeben. Ferner weist die speicherprogrammierbare Steuerung 12 eine Schnittstelle 19 zum Programmiergerät auf. Der Prozessor 13, die Speicher 14,18, der Controller 15 sowie die Kommunikationsschnittstelle 19 sind ebenfalls über einen Bus 20 miteinander verbunden.

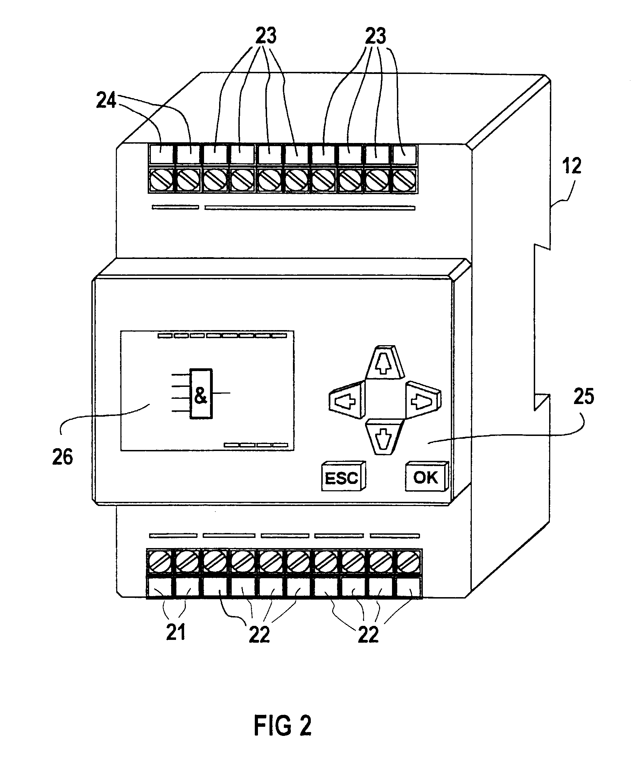

Programmiergerät 1 und speicherprogrammierbare Steuerung 12 können im Prinzip voneinander getrennte Geräte sein. Vorzugsweise ist das Programmiergerät 1 jedoch, wie in FIG 1 durch die gestrichelte Linie und auch in FIG 2 dargestellt, in die speicherprogrammierbare Steuerung 12 integriert. In beiden Fällen ist es aber möglich, daß das Programmiergerät 1 über die Schnittstellen 8 und 19 sowie die Kommunikationsverbindung 11 auf den Festwertspeicher 14 zugreift. Dabei ist es möglich, daß ein neues Anwenderprogramm in den Festwertspeicher 14 geschrieben wird und daß ein bestehendes Anwenderprogramm gelesen, gelöscht oder geändert wird.

Gemäß FIG 2 weist die speicherprogrammierbare Steuerung 12 Schraubanschlüsse 21 bis 24, ein Tastaturfeld 25 sowie ein LCD-Display 26 auf. Über die Schraubanschlüsse 21 ist die speicherprogrammierbare Steuerung 12 mit einer 24 Volt-Stromversorgung verbindbar. Über je zwei der Schraubanschlüsse 22 ist ein Digital-Ausgangssignal an den technischen Prozeß 17 ausgebbar. Über je eine der Schraubklemmen 23 ist ein Eingangssignal vom technischen Prozeß 17 einlesbar. Über die Schraubklemmen 24 sind die Aktoren und Sensoren, welche an die Schraubklemmen 22 und 23 angeschlossen sind, mit Strom versorgbar. Die Schraubklemmen 22 bis 24 sind also Bestandteil der Prozeßschnittstelle 16.

Das LCD-Display 26 entspricht der Anzeigeeinheit 10 des Programmiergerats 1. Über das Display 26 sind ferner auch Meldungen der speicherprogrammierbaren Steuerung 12 während des Betriebs anzeigbar. Das Display 26 dient also auch als Beobachtungseinheit. Das Tastaturfeld 25 ermöglicht es, Befehle direkt in das Programmiergerät 1 und die speicherprogrammierbare Steuerung 12 einzugeben.

Das Anwenderprogramm besteht, wie allgemein üblich aus einzelnen Befehlen, wobei jeder Befehl jeweils aus einem Funktionscode und dem Funktionscode zugeordneten Funktionsparametern besteht. Im Betrieb arbeitet die speicherprogrammierbare Steuerung zyklisch folgende Befehlsfolge ab:
- Sie liest Eingangssignale vom technischen Prozeß 17 ein.
- Sie ermittelt anhand des Anwenderprogramms Ausgangssignale für den technischen Prozeß.
- Sie gibt die Ausgangssignale an den technischen Prozeß 17 aus.

Diese Vorgehensweise ist allgemein bekannt.

Bei der Erzeugung des Anwenderprogramms werden durch die Programmiereinheit 1 nacheinander die abzuarbeitenden Befehle von der Eingabeeinheit 9 abgefragt. Hierzu wird, beginnend mit dem dem ersten Ausgangssignal zuzuordnenden Befehl, abgefragt, welche Funktion abgearbeitet werden soll. Es wird also eine entsprechende Anfrage auf der Anzeigeeinheit 10 ausgegeben und gewartet, bis der Anwender über die Eingabeeinheit 9 den Funktionscode eingegeben hat.

Sowie der Funktionscode eingegeben ist, wird dieser von der Programmiereinheit 1 im Schreib-Lese-Speicher 5 zwischengespeichert. Sodann stellt die Programmiereinheit 1 fest', wie viele Funktionsparameter diesem Befehl zugeordnet sind. Hierbei ist zu unterscheiden zwischen der internen Zuordnung innerhalb des Programmiergerats 1 und der für den Anwender sichtbaren Zahl der Funktionsparameter. Intern ist die Zahl der Funktionsparameter für alle Funktionscodes derselbe, im vorgegebenen Beispiel gleich vier. Nach außen hingegen wird stets nur die Zahl der benötigten Funktionsparameter abgefragt. Ein Beispiel soll dies näher erläutern:

Wenn als Funktionscode der Code für die Oderverknüpfung eingegeben wird, werden tatsächlich vier Parameter abgefragt. Diese vier Parameter werden dann später bei der Abarbeitung des Programms auch berücksichtigt. Wenn hingegen z.B. die logische Verneinung als Funktionscode gewählt wird, wird vom Anwender nur ein Parameter, nämlich das zu negierende Eingangssignal, abgefragt. Die anderen drei Parameter werden vom Programmiergerät 1 selbständig aufgefüllt und bei der Abarbeitung des Programms nicht berücksichtigt.

Nach dem Abfragen und Zwischenspeichern des Funktionscodes im Schreib-Lese-Speicher 5 werden durch die Programmiereinheit 1 im Zusammenwirken mit der Eingabeeinheit 9 und der Anzeigeeinheit 10 nacheinander auch die Funktionsparameter abgefragt und zwischengespeichert. Als Funktionsparameter kann entweder ein Eingangssignal oder ein anderer Funktionscode eingegeben werden. Dabei wird bei jeder Eingabe eines Funktionsparameters sofort überprüft, ob dieser ein Funktionscode ist.

Wenn der Funktionsparameter kein Funktionscode, sondern ein Eingangssignal ist, wird dieses zwischengespeichert und mit dem nächsten Funktionsparameter fortgefahren. Unter Eingangssignal sind dabei im vorliegenden Fall nicht nur Eingangssignale vom technischen Prozeß 17 zu verstehen, sondern auch Signale, deren Wert vorbekannt ist. Beispiel für derartige Signale sind das Konstant-Eins- oder das Konstant-Null-Signal sowie ein Taktsignal.

Wenn als Funktionsparameter dagegen ein neuer Funktionscode eingegeben wird, wird als Funktionsparameter nicht der Funktionscode zwischengespeichert, sondern die Adresse eines neuen Befehls. Unmittelbar danach wird zu diesem neuen Befehl verzweigt und dort der unmittelbar zuvor eingegebene Funktionscode zwischengespeichert. Sodann wird erneut die Zahl der Funktionsparameter festgestellt, und es werden die Funktionsparameter abgefragt und zwischengespeichert.

Auch bei diesen Funktionsparametern wird sofort wieder überprüft, ob sie Eingangssignale oder Funktionscodes sind. Wenn sie neue Funktionscodes sind, wird wiederum erneut sofort die Adresse dieses neuen Befehls als Funktionsparameter abgespeichert und zu diesem neuen Befehl verzweigt. Auch hier wird wieder der soeben eingegebene Funktionscode abgespeichert, festgestellt wieviele Funktionsparameter benötigt werden und die Funktionsparameter abgefragt und zwischengespeichert.

Dieses verschachtelte Abfragen von Funktionscodes und Funktionsparametern wird solange fortgesetzt, bis alle Funktionsparameter des zuletzt abgefragten und zwischengespeicherten Funktionscodes auf Eingangssignale verweisen. Wenn dann alle Funktionsparameter auf Eingangssignale verweisen, ist der jeweilige Befehl vollständig eingegeben. Es wird dann zurückgegangen zum vorhergehenden Befehl und bei diesem gegebenenfalls der nächste Funktionsparamter abgefragt und zwischengespeichert, wobei auch hier wieder gegebenenfalls zu weiteren Befehlen verzweigt wird.

Obenstehende Prozedur wird solange fortgesetzt, bis alle zur Ermittlung eines Ausgangssignals erforderlichen Funktionen miteinander verschaltet sind, also alle Funktionsparameter jedes Befehls eingegeben worden sind. Erst wenn dies erfolgt ist, wird der dem nächsten Ausgangssignal zuzuordnende Befehl abgefragt und die Prozedur, soweit erforderlich, wiederholt. Auf diese Art werden nacheinander alle Ausgangssignale programmiert.

Das Eingeben des Anwenderprogramms kann vom Anwender selbstverständlich jederzeit abgebrochen werden. In diesem Fall erfolgt jedoch kein Abspeichern des eingegebenen und zwischengespeicherten Teilprogramms. Beim Ausschalten des Programmiergeräts 1 sind die eingegebenen Daten verloren. Ein Abspeichern der abgefragten und im Schreib-Lese-Speicher 5 zwischengespeicherten Anwenderprogramms im Remanentspeicher 14 wird erst dann ermöglicht, wenn der Programmiervorgang vollständig beendet ist. Als vollständig beendet gilt der Programmiervorgang bzw. das Erzeugen des Anwenderprogramms dann,
- wenn zu jedem Ausgangssignal ein Befehl eingegeben worden ist, und
- wenn jeder Funktionsparameter jedes programmierten Funktionscodes belegt ist.

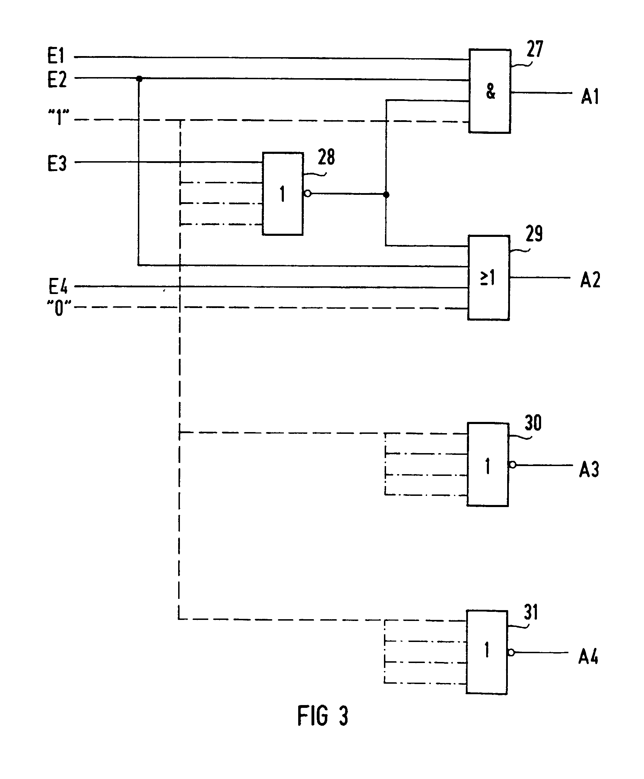

FIG 3 zeigt ein Beispiel eines einfachen Anwenderprogramms. Die durchgezogenen Linien bedeuten dabei die aufgrund der gewünschten Verknüpfungen erforderlichen Verbindungen. Die gestrichelten Linien zeigen die aufgrund des Programmierschemas erforderlichen zusätzlichen Verbindungen, und die strichpunktierten Linien zeigen die vom Programmiergerät 1 selbständig ergänzten Verbindungen. Die Eingabe des Programmierbeispiels gemäß FIG 3 geschieht wie folgt:

Zunächst fragt das Programmiergerät über Anzeigeeinheit 10 und Eingabeeinheit 9 ab, welcher Funktionscode für die Ermittlung des Ausgangssignals des ersten Ausgangs A1 benötigt wird. Der Anwender gibt daraufhin über die Eingabeeinheit ein, daß eine UND-Verknüpfung 27 erfolgen soll. Der korrespondierende Funktionscode wird im Schreib-Lese-Speicher 5 des Programmiergeräts 1 zwischengespeichert. Sodann werden nacheinander der erste, der zweite und der dritte Funktionsparameter, d.h. drei der vier Eingangssignale der UND-Verknüpfung 27, abgefragt und zwischengespeichert.

Der erste und der zweite Eingangsparameter sind die Eingangssignale E1 und E2. Es wird daher bei der Eingabe dieser bei; den Funktionsparameter sofort mit dem nächsten Funktionsparameter fortgefahren. Beim Abfragen des dritten Funktionsparameters hingegen wird durch den Anwender eingegeben, daß er eine NICHT-Verknüpfung 28 vorzunehmen wünscht. Als dritter Funktionsparameter wird daher die Adresse des Befehls zwischengespeichert, an dem dann die NICHT-Verknüpfung 28 behandelt wird.

Sodann wird durch das Programmiergerät 1 zu diesem Befehl verzweigt und abgefragt, welches der (einzige) Funktionsparameter der NICHT-Verknüpfung 28 sein soll. Hier wird durch den Anwender das Eingangssignal E3 eingegeben. Das Programmiergerät 1 speichert diesen Funktionsparameter zwischen und ergänzt den Befehl mit drei weiteren Funktionsparametern, welche jeweils auf die logische Eins verweisen. Auch diese drei Funktionsparameter werden im Speicher 5 zwischengespeichert. Hierdurch ist dann die Parametrierung der NICHT-Verknüpfung 28 abgeschlossen. Es wird daher zur weiteren Parametrierung der UND-Verknüpfung 27 zurückgekehrt und der vierte Funktionsparameter abgefragt und zwischengespeichert. Da die UND-Verknüpfung 27 gemäß dem Beispiel nach FIG 3 nur drei echte Eingangsparameter aufweist, wird der vierte Eingang durch entsprechende Eingabe des Anwenders mit der logischen Eins verbunden.

Hiermit ist die Programmierung des Ausgangs A1 abgeschlossen, und es wird mit der Programmierung des Ausgangs A2 fortgefahren.

Zunächst wird abgefragt und nach Eingabe durch den Anwender zwischengespeichert, daß der Funktionscode für die Erzeugung des Ausgangssignals A2 eine ODER-Verknüpfung 29 ist. Sodann werden nacheinander die vier Funktionsparameter der ODER-Verknüpfung 29 abgefragt.

Als ersten Funktionsparameter wird gemäß dem Programmierbeispiel von FIG 3 die bereits programmierte NICHT-Verknüpfung des Eingangs E3 eingegeben. Da diese Verknüpfung bereits fertig programmiert ist, ist keine weitere Eingabe bezüglich dieses Funktionsparameters erforderlich und es wird nach der Zwischenspeicherung sofort mit dem zweiten Funktionsparameter fortgefahren.

Der zweite und der dritte Funktionsparameter sind die (echten) Eingangssignale E2 und E4, so daß sofort mit dem vierten Funktionsparameter fortgefahren werden kann.

Gemäß dem Programmierbeispiel von FIG 3 hat auch die ODER-Verknüpfung 29 nur drei Eingangssignale. Der vierte Funktionsparameter verweist daher auf die Konstant-Null.

Da hiermit auch die Programmierung des Ausgangs A2 abgeschlossen ist, wird mit dem Ausgang A3 fortgefahren.

Die Ausgänge A3 und A4 werden gemäß dem gegebenen Programmierbeispiel eigentlich nicht benötigt. Für den Ausgang A3 wird daher die NICHT-Verknüpfung 30 gewählt, welche mit der logischen Eins verknüpft wird. Dadurch ist der Ausgang A3 auf Konstant-Null geschaltet. Gleiches geschieht mit dem Ausgang A4, für welchen die NICHT-Verknüpfung 31 eingegeben wird. Alternativ ist es auch möglich, die Ausgänge A3 und A4 direkt mit der logischen Null zu verbinden.

Das daraus resultierende Programm wird dann im Speicher 14 abgespeichert. Es ist in der nachstehenden Tabelle dargestellt.
- B1:: FC (AND)
ADDR (E1)
ADDR (E2)
ADDR (B5)
ADDR ("1")
- B2:: FC (OR)
ADDR (B5)
ADDR (E2)
ADDR (E4)
ADDR ("0")
- B3:: FC (NOT)
ADDR ("1")
ADDR ("1")
ADDR ("1")
ADDR ("1")
- B4:: FC (NOT)
ADDR ("1")
ADDR ("1")
ADDR ("1")
ADDR ("1")
- B5:: FC (NOT)
ADDR (E3)
ADDR ("1")
ADDR ("1")
ADDR ("1")

Links in Tabelle 1 sind mit B1 bis B5 jeweils der Anfang der einzelnen Befehle dargestellt. Diese Angaben dienen aber nur zur Erläuterung und sind nicht Bestandteil des abgespeicherten Programms. Im eigentlichen Programm steht FC für Funktionscode, ADDR für Adresse.

Das Programm als solches besteht aus Blöcken zu je fünf Byte. Das erste Byte stellt jeweils den Funktionscode des Befehls dar, die anderen vier Bytes die vier Funktionsparameter. Die ersten vier Befehle B1 bis B4 definieren stets die Befehle für die vier Ausgangssignale. Ab dem fünften Befehl B5 sind dann Befehle abgespeichert, auf die bei der Berechnung der Ausgangssignale indirekt zurückgegriffen werden muß.

Die Abarbeitung des Anwenderprogramms geschieht wie folgt:

Es werden zyklisch die Befehle B1 bis B4 abgearbeitet. Bei der Abarbeitung jedes der Befehle B1 bis B4 wird zunächst der dem Befehl zugeordnete Funktionscode gelesen. Sodann werden nacheinander die diesem Befehl zugeordneten Funktionsparamter gelesen. Beim Lesen jedes Funktionsparameters wird sofort überprüft, ob dieser auf einen anderen Befehl verweist. Wenn der Funktionsparameter auf ein Eingangssignal verweist, wird dieses zwischengespeichert.

Wenn der Funktionsparameter dagegen auf einen anderen Befehl verweist, wird sofort, d.h. vor dem Lesen der anderen Funktionsparameter, zu diesem Befehl verzweigt und der diesen Befehl zugeordnete Funktionscode und die diesem Befehl zugeordneten Funktionsparameter gelesen. Auch hier wird, wenn der Funktionscode auf einen neuen Befehl zeigt, sofort wieder dieser Befehl ausgeführt, bevor die weiteren Funktionsparameter abgearbeitet werden. Wenn alle Funktionsparameter eines Befehls abgearbeitet sind, wird das diesem Befehl zugeordnete Ausgangssignal ermittelt, gegebenenfalls zum aufrufenden Befehl zurückgesprungen, und das ermittelte Ausgangssignal der weiteren Abarbeitung des Anwenderprogramms zugrunde gelegt.

Auch hier soll das Prinzip anhand des Programms gemäß Tabelle näher erläutert werden.

Zunächst wird also der Funktionscode des Befehls B1 gelesen. Sodann werden die Funktionsparameter gelesen, welche auf die Eingänge E1 und E2 verweisen. Beim Lesen des dritten Funktionsparameters wird zum Befehl B5 verzweigt. Dessen Funktionscode und alle vier Funktionsparameter (weil alle auf Eingangssignale verweisen) werden gelesen und das dem Befehl B5 zugeordnete Ausgangssignal ermittelt. Mit diesem Ausgangssignal wird dann zum Befehl B1 zurückgekehrt und der vierte Funktionsparameter gelesen. Sodann wird das Ausgangssignal A1 ermittelt und im Schreib-Lese-Speicher 18 abgespeichert.

Danach wird der Funktionscode des Befehls B2 gelesen und der erste Funktionsparameter des Befehls B2. Sodann wird erneut zum Befehl B5 verzweigt, dessen Funktionscode und dessen vier Funktionsparameter gelesen und das Ausgangssignal des Befehls B5 ermittelt. Sodann wird zum Befehl B2 zurückgekehrt und die übrigen drei Funktionsparameter gelesen. Sodann wird das Ausgangssignal des Befehls B2 ermittelt.

Schließlich werden noch der Funktionscode und die Funktionsparameter des Befehls B3 gelesen und ausgeführt und so das Ausgangssignal A3 ermittelt. Gleiches geschieht mit dem Befehl B4 und dem daraus folgenden Ausgangssignal A4.

Nach der Ermittlung des letzten Ausgangssignals A4 werden die so ermittelten Ausgangssignale A1 bis A4 an den technischen Prozeß 17 ausgegeben und erneut die Eingangssignale E1 bis E4 eingelesen. Sodann wird ein neuer Zyklus bei der Ermittlung der Ausgangssignale A1 bis A4 begonnen.

Alternativ zum beschriebenen Erstellungsverfahren ist es auch möglich, die Befehle, die zu einem Ausgangssignal gehören, sofort im Remanentspeicher 14 abzuspeichern, wenn das jeweilige Ausgangssignal vollständig programmiert ist. Es konnten beispielsweise also die Befehle B1 und B5 sofort abgespeichert werden, sowie das Ausgangssignal A1 vollständig programmiert ist.

Ebenso ist es auch möglich, jeden eingegebenen Funktionscode und jeden eingegebenen Funktionsparameter sofort im Remanentspeicher 14 abzuspeichern. In diesem Fall müßte in einem speziell hierfür vorgesehenen Speicherbereich des Remanentspeichers 14 zu Beginn eines Programmerstellungsvorgangs hinterlegt werden, daß die Programmierung aller Ausgangssignale A1 bis A4 ungültig ist. Beispielsweise könnten vier 1 Bit-Speicherzellen auf logisch-Null gesetzt werden, um anzudeuten, daß die vier Ausgangssignale A1 bis A4 ungültig programmiert sind. Die vier 1 Bit-Speicherzellen könnten dann auf logischEins gesetzt werden, wenn die Ausgangssignale A1 bis A4 gültig programmiert worden sind. Das Als-gültig-Kennzeichnen kann dabei wahlweise nach der Erstellung des gesamten Anwenderprogramms oder separat für jedes Ausgangssignal A1 bis A4 nach der Abfrage aller Befehle des jeweiligen Ausgangssignals A1 bis A4 erfolgen.

Die Befehle müssen auch nicht in der Reihenfolge gemäß der Tabelle abgespeichert sein. Es ist beispielsweise möglich, alle Befehle, die zur Ermittlung des Ausgangssignals A1 benötigt werden, hier die Befehle B1 und B5, nacheinander im Speicher 14 abzulegen. Die Befehle B2 bis B4 zur Ermittlung der Ausgangssignale A2 bis A4 würden dann hinter diesen Befehlen (hier B1 und B5) abgespeichert werden. Beim Abarbeiten des Anwenderprogramms ist in diesem Fall zu verfolgen, welches die höchste Adresse ist, die zur Ermittlung des Ausgangssignals A1 aufgerufen wird. Der Befehl zur Ermittlung des Ausgangssignals A2 beginnt dann bei der nächsthöheren Adresse. Auf ähnliche Weise, nämlich Zwischenspeichern der höchsten benötigten Adresse, kann dann ermittelt werden, an welcher Stelle die Befehle zur Ermittlung der Ausgangssignale A3 und A4 angeordnet sind. Ob der Fachmann bei der Implementierung der vorliegenden Erfindung der einen oder der anderen Vorgehensweise den Vorzug gibt, liegt jedoch in seinem Belieben.

## Patentansprüche

1. Verfahren zum Erzeugen und Abspeichern eines aus Befehlen (B1 bis B5) bestehenden Anwenderprogramms für eine speicherprogrammierbare Steuerung,
- wobei die speicherprogrammierbare Steuerung bei Abarbeitung des Anwenderprogramms aus Eingangssignalen (E1 bis E4) von einem technischen Prozeß (17) Ausgangssignale (A1 bis A4) für den technischen Prozeß (17) ermittelt,
- wobei die Befehle (B1 bis B5) des Anwenderprogramms jeweils aus einem Funktionscode und dem Funktionscode zugeordneten Funktionsparametern bestehen,
- wobei die Funktionsparameter entweder auf ein Eingangssignal (E1 bis E4) oder auf einen anderen Befehl (B5) verweisen,
mit folgenden Schritten:
a) bei der Erzeugung des Anwenderprogramms werden pro Ausgangssignal, beginnend mit dem dem jeweiligen Ausgangsignal (A1 bis A4) zuzuordnenden Befehl (B1 bis B4), die abzuarbeitenden Befehle (B1 bis B5) abgefragt, wobei folgende Prozedur abgearbeitet wird:
b) es wird der abzuarbeitende Funktionscode abgefragt und zwischengespeichert;
c) es wird die Zahl der Funktionsparameter festgestellt;
d) es werden nacheinander die Funktionsparameter abgefragt;
e) wenn der Funktionsparameter ein Eingangssignal (E1 bis E4) ist, wird ein Verweis auf das Eingangssignal (E1 bis E4) zwischengespeichert;
f) wenn der Funktionsparameter ein neuer Funktionscode ist, wird ein Verweis auf einen neuen Befehl (B5) zwischengespeichert, wird zu diesem neuen Befehl (B5) verzweigt und werden der andere Funktionscode zwischengespeichert und die Schritte c) bis f) für den neuen Befehl (B5) wiederholt;
g) die zwischengespeicherten Funktionscodes und die zwischengespeicherten Funktionsparameter werden erst dann in einem Remanentspeicher (14) hinterlegt bzw. erst dann als gültig gekennzeichnet, wenn alle Befehle (B1 bis B5) zumindest des jeweiligen Ausgangssignals (A1 bis A4) vollständig abgefragt sind.

2. Betriebsverfahren für eine speicherprogrammierbare Steuerung,
- wobei die speicherprogrammierbare Steuerung zyklisch ein aus Befehlen (B1 bis B5) bestehendes Anwenderprogramm abarbeitet, um aus Eingangssignalen (E1 bis E4) von einem technischen Prozeß (17) Ausgangssignale (A1 bis A4) für den technischen Prozeß (17) zu ermitteln,
- wobei die Befehle (B1 bis B5) des Anwenderprogramms jeweils aus einem Funktionscode und dem Funktionscode zugeordneten Funktionsparametern bestehen,
- wobei die Funktionsparameter entweder auf ein Eingangssignal (E1 bis E4) oder auf einen anderen Befehl (B5) verweisen,
mit folgenden Schritten:
a) bei der zyklischen Abarbeitung wird, beginnend mit den den Ausgangsignalen (A1 bis A4) zugeordneten Befehlen (B1 bis B4), pro Befehl (B1 bis B5) folgende Prozedur abgearbeitet:
b) es werden der dem Befehl (B1 bis B5) zugeordnete Funktionscode und die diesem Befehl (B1 bis B5) zugeordneten Funktionsparameter gelesen;
c) pro Funktionsparameter wird überprüft, ob dieser auf einen anderen Befehl (B5) verweist;
d) wenn der Funktionsparameter auf ein Eingangssignal (E1 bis E4) verweist, wird das Eingangssignal (E1 bis E4) zwischengespeichert;
e) wenn der Funktionsparameter auf einen anderen Befehl (B5) verweist, wird zu dem anderen Befehl (B5) verzweigt und werden die Schritte b) bis e) mit dem anderen Befehl (B5) wiederholt;
f) wenn alle Funktionsparameter abgearbeitet sind, wird das dem Befehl (B1 bis B5) zugeordnete Ausgangssignal (A1 bis A4) ermittelt.

3. Programmiereinheit zur Durchführung des Verfahren nach Anspruch 1, mit
- Mitteln (2,4,5,6,7,9,10) zum Abfragen und Zwischenspeichern von Funktionscodes abzuarbeitender Befehle;
- Mitteln (2,4) zum Feststellen der Zahl von Funktionsparametern der abzuarbeitenden Befehle;
- Mitteln (2,4,5,6,7,9,10) zum Abfragen und Zwischenspeichern der Funktionsparameter;
- Mitteln (2,4) zum Überprüfen der Funktionsparameter, ob diese ein neuer Funktionscode sind;
- Mitteln (2,4) zum Verzweigen zu einem neuen Befehl, wenn der Funktionsparameter ein neuer Funktionscode ist;
- Mitteln (2,4) zum Verhindern des Abspeicherns der zwischengespeicherten Funktionscodes und der zwischengespeicherten Funktionsparameter in einem Remanentspeicher (14) bzw. zum Verhindern des Als-gültig-Kennzeichnens, wenn noch nicht alle Funktionsparameter aller abzuarbeitenden Befehle zumindest eines Ausgangssignals (A1 bis A4) zwischengespeichert sind.

4. Speicherprogrammierbare Steuerung zur Durchführung des Verfahren nach Anspruch 2, mit
- Mitteln (13) zum Lesen von Befehlen zugeordneten Funktionscodes und Funktionsparametern;
- Mitteln (13) zum Überprüfen der Funktionsparameter, ob diese auf ein Eingangssignal oder auf einen anderen Befehl verweisen;
- Mitteln (18) zum Zwischenspeichern des Eingangssignals, wenn der Funktionsparameter auf das Eingangssignal verweist;
- Mitteln (13) zum Verzweigen zu dem anderen Befehl, wenn der Funktionsparameter auf den anderen Befehl verweist;
- Mitteln (13) zum Zurückkehren zu einem aufrufenden Befehl;
- Mitteln (13) zum Ermitteln des dem Befehl zugeordneten Ausgangssignals, wenn alle ihm zugeordneten Funktionsparameter abgearbeitet sind.

5. Speicherprogrammierbare Steuerung nach Anspruch 4, die mit einer Programmiereinheit nach Anspruch 3 kombiniert ist.

## Claims

1. Method for the generation and storage of a user program, consisting of instructions (B1 to B5), for a programmable controller,
- the programmable controller, when executing the user program, determining output signals (A1 to A4) for an industrial process (17) from input signals (E1 to E4) from the industrial process (17),
- the instructions (B1 to B5) of the user program consisting in each case of a function code and function parameters assigned to the function code,
- the function parameters referring either to an input signal (E1 to E4) or to another instruction (B5),
having the following steps:
a) during the generation of the user program, for each output signal, beginning with the instruction (B1 to B4) to be assigned to the respective output signal (A1 to A4), the instructions (B1 to B5) to be executed are called up, the following procedure being executed:
b) the function code to be executed is called up and stored temporarily;
c) the number of function parameters is established;
d) the function parameters are called up one after the other;
e) if the function paramecer is an input signal (E1 to E4), a reference to the input signal (E1 to E4) is stored temporarily;
f) if the function parameter is a new function code, a reference to a new instruction (B5) is stored temporarily, a branch is made to this new instruction (B5) and the other function code is stored temporarily and the steps c) to f) are repeated for the new instruction (B5);
g) the temporarily stored function codes and the temporarily stored function parameters are stored in a nonvolatile memory (14) and, respectively, identified as valid, only after all the instructions (B1 to B5) of at least the respective output signal (A1 to A4) has been called up completely.

2. Operating method for a programmable controller,
- the programmable controller cyclically executing a user programme consisting of instructions (B1 to B5) in order to determine output signals (A1 to A4) for an industrial process (17) from input signals (E1 to E4) from the industrial process (17),
- the instructions (B1 to B5) of the user program in each case consisting of a function code and function parameters assigned to the function code,
- the function parameters referring either to an input signal (E1 to E4) or to another instruction (B5),
having the following steps:
a) during the cyclic execution, for each instruction (B1 to B5), beginning with the instructions (B1 to B4) assigned to the output signals (A1 to A4), the following procedure is executed:
b) the function code assigned to the instruction (B1 to B5) and the function parameters assigned to this instruction (B1 to B5) are read;
c) for each function parameter a check is made as to whether this refers to another instruction (B5);
d) if the function parameter refers to an input signal (E1 to E4), the input signal (E1 to E4) is stored temporarily;
e) if the function parameter refers to another instruction (B5), a branch is made to this other instruction (B5) and the steps b) to e) are repeated with the other instruction (B5);
f) when all the function parameters have been exhausted, the output signal (A1 to A4) assigned to the instruction (B1 to B5) is determined.

3. Programming unit for implementing the method according to Claim 1, having
- means (2, 4, 5, 6, 7, 9, 10) for calling up and temporarily storing function codes of instructions to be executed;
- means (2, 4) for establishing the number of function parameters of the instructions to be executed;
- means (2, 4, 5, 6, 7, 9, 10) for calling up and temporarily storing the function parameters;
- means (2, 4) for checking the function parameters as to whether these are a new function code;
- means (2, 4) for branching to a new instruction if the function parameter is a new function code;
- means (2, 4) for preventing the storing of the temporarily stored function codes and the temporarily stored parameters in a nonvolatile memory (14) or, respectively, for preventing the as-valid identification if the function parameters of all instructions to be executed of an output signal (A1 to A4) have not yet all been stored temporarily.

4. Programmable controller for implementing the method according to Claim 2, having
- means (13) for reading function codes and function parameters assigned to instructions;
- means (13) for checking the function parameters as to whether these refer to an input signal or to another instruction;
- means (18) for storing the input signal temporarily if the function parameter refers to the input signal;
- means (13) for branching to the other instruction if the function parameter refers to the other instruction;
- means (13) for returning to a calling instruction;
- means (13) for determining the output signal assigned to the instruction when all the function parameters assigned to the latter have been exhausted.

5. Programmable controller according to Claim 4, which is combined with a programming unit according to Claim 3.

## Revendications

1. Procédé pour produire et mémoriser un programme d'application constitué d'instructions B1 à B5) pour un système à programme enregistré,
- le système à programme enregistré déterminant lors de l'exécution du programme d'application, à partir de signaux (E1 à E4) d'entrée provenant d'une opération (17) technique, des signaux (A1 à A4) de sortie pour l'opération (17) technique,
- les instructions (B1 à B5) du programme d'application consistant chacune en un code fonctionnel et en des paramètres fonctionnels associés au code fonctionnel,
- les paramètres fonctionnels renvoyant à un signal (E1 à E4) d'entrée ou à une autre instruction (B5),
comportant les étapes suivantes :
a) lors de la production du programme d'application, les instructions à exécuter sont interrogées, en commençant par l'instruction associée au signal de sortie concerné, la procédure suivante étant exécutée :
b) le code fonctionnel à exécuter est interrogé et mis en mémoire tampon ;
c) le nombre des paramètres fonctionnels est constaté ;
d) les paramètres fonctionnels sont interrogés les uns après les autres ;
e) si le paramètre fonctionnel est un signal d'entrée, un renvoi au signal d'entrée est mis en mémoire tampon ;
f) si le paramètre fonctionnel est un nouveau code fonctionnel, un renvoi à une nouvelle instruction est mis en mémoire tampon, est bifurqué vers cette nouvelle instruction et l'autre code fonctionnel est mis en mémoire tampon et les étapes c) à f) sont répétées pour la nouvelle instruction ;
g) les codes fonctionnels mis en mémoire tampon et les paramètres fonctionnels mis en mémoire tampon ne sont mémorisés dans une mémoire rémanente ou caractérisés comme valables, que quand toutes les instructions au moins du signal de sortie concerné ont été totalement interrogées.

2. Procédé pour faire fonctionner un système à programme enregistré,
- le système à programme enregistré exécutant de manière cyclique un programme d'application constitué d'instructions (B1 à B5), afin de déterminer à partir de signaux (E1 à E4) d'entrée venant d'une opération (17) technique des signaux (A1 à A4) de sortie pour l'opération (17) technique,
- les instructions (B1 à B5) du programme d'application consistant chacune en un code fonctionnel et en des paramètres fonctionnels associés au code fonctionnel,
- les paramètres fonctionnels renvoyant à un signal (E1 à E4) d'entrée
ou à une autre instruction (B5), comportant les étapes suivantes :
a) lors de l'exécution cyclique, on exécute pour chaque instruction (B1 à B5), en commençant par les instructions (B1 à B4) associées aux signaux (A1 à A4) de sortie, la procédure suivante :
b) on lit le code fonctionnel associé à l'instruction (B1 à B5) et les paramètres fonctionnels associés à cette instruction (B1 à B5) ;
c) on vérifie pour chaque paramètre fonctionnel si ce paramètre renvoie à une autre instruction (B5) ;
d) si le paramètre fonctionnel renvoie à un signal (E1 à E4) d'entrée, on met en mémoire tampon le signal (E1 à E4) d'entrée;
e) si le paramètre fonctionnel renvoie à une autre instruction (B5), on bifurque vers l'autre instruction (B5) et on répète les étapes b) à e) avec l'autre instruction (B5);
f) quand tous les paramètres fonctionnels sont exécutés, on détermine le signal (A1 à A4) de sortie associé à l'instruction (B1 à B5).

3. Unité de programmation pour la mise en oeuvre du procédé suivant la revendication 1, comportant:
- des moyens (2, 4, 5, 6, 7, 9, 10) pour interroger et mettre en mémoire tampon des codes fonctionnels d'instructions à exécuter ;
- des moyens (2, 4) pour constater le nombre de paramètres fonctionnels des instructions à exécuter ;
- des moyens (2, 4, 5, 6, 7, 8, 9, 10) pour interroger et mettre en mémoire tampon les paramètres fonctionnels ;
- des moyens (2, 4) pour vérifier si les paramètres fonctionnels sont un nouveau code fonctionnel ;
- des moyens (2, 4) pour bifurquer vers une nouvelle instruction si le paramètre fonctionnel est un nouveau code fonctionnel ;
- des moyens (2, 4) pour empêcher la mise en mémoire dans une mémoire (14) rémanente des codes fonctionnels mis en mémoire tampon et des paramètres fonctionnels mis en mémoire tampon ou pour empêcher leur caractérisation comme valable si tous les paramètres fonctionnels de toutes les instructions à exécuter d'au moins un signal (A1 à A4) de sortie ne sont pas encore mis en mémoire tampon.

4. Système à programme enregistré pour la mise en oeuvre du procédé suivant la revendication 2, comportant
- des moyens (13) pour lire des codes fonctionnels et des paramètres fonctionnels associés à des instructions ;
- des moyens (13) pour vérifier si les paramètres fonctionnels renvoient à un signal d'entrée ou à une autre instruction ;
- des moyens (18) pour mettre en mémoire tampon le signal d'entrée si le paramètre fonctionnel renvoie au signal d'entrée ;
- des moyens (13) pour bifurquer vers l'autre instruction si le paramètre fonctionnel renvoie à l'autre instruction ;
- des moyens (13) pour revenir à une instruction appelante ;
- des moyens (13) pour déterminer le signal de sortie associé à l'instruction si tous les paramètres fonctionnels qui lui sont associés sont exécutés.

5. Système à programme enregistré suivant la revendication 4 qui est combiné à une unité de programmation suivant la revendication 3.
